# EUROPEAN PATENT SPECIFICATION

(11) **EP 1 600 346 B1**
(45) Date of publication and mention of the grant of the patent: **15.07.2009**
(21) Application number: 05011249.9
(22) Date of filing: 24.05.2005
(51) Int. Cl.: B60T 8/36

(54) **Fluid pressure control device**
Fluid-Drucksteuergerät
Dispositif de commande de pression d'un fluide

(30) Priority: 13.04.2005 JP 2005115642; 26.05.2004 JP 2004156303
(43) Date of publication of application: 30.11.2005
(73) Proprietor: Hitachi Ltd., Tokyo 100-8280 (JP)
(72) Inventor: Nakazawa, Chiharu, Atsugi-shi Kanagawa 243-8510 (JP)
(74) Representative: Schaeberle, Steffen

(56) References cited:
- DE-A1- 10 061 905
- DE-A1- 10 244 556
- DE-A1-9102004 024 04
- DE-A1-0102004 044 73
- US-B1- 6 679 568

## Description

### BACKGROUND OF THE INVENTION

The present invention relates to a fluid pressure control device, and more particularly, to a fluid pressure control device applied as a vehicle break device.

A fluid pressure control device is disclosed in JP-A-10-129445 (closest prior art), wherein the device includes a housing, a motor, a solenoid valve and a circuit board for controlling the motor and the solenoid valve. The motor and the circuit board are disposed on a first side surface of the housing, and the solenoid valve is disposed on a different side surface of the first side surface.

However, in the above case, the solenoid valve and the circuit board are disposed on different side surfaces of the housing. Therefore, a distance between the solenoid valve and the circuit board is long. A bus bar for connecting both the solenoid valve and the circuit board is molded into a cover of the solenoid valve. As a result, the structure for connecting the solenoid valve and the circuit board is complicated.

### SUMMARY OF THE INVENTION

It is an object of present invention to provide a fluid pressure control device that makes it easy to connect the solenoid valve and the circuit board.

To achieve the above object, there is provided according to an aspect of the present invention, a fluid pressure control device including a housing having a hydraulic circuit a pump built into the housing, a motor for driving the pump, a circuit board for controlling the motor and a solenoid valve for changing the amount of venting of the hydraulic circuit. The motor, the circuit board and the solenoid valve are disposed on the same side of the housing.

According to the other aspect of the present invention a fluid pressure control device includes a case, a housing having a hydraulic circuit, a pump built into the housing, a motor for driving the pump, a circuit board for controlling the motor and a solenoid valve for changing the amount of venting of the hydraulic circuit. A first assembly has the solenoid valve and the motor, which are attached to the same side of the housing. A second assembly has the circuit board, which is fixed to the casing. The first assembly and the second assembly are assembled to each other along a same axis. The circuit board and the motor, and the circuit board and the solenoid valve are assembled by assembling the first assembly to the second assembly.

According to another aspect of the present invention, a method of assembling a fluid pressure control device includes processing a first assembly by assembling a pump, a motor for controlling the pump and a valve body of a solenoid valve fix to a housing and processing a second assembly by assembling a coil portion of the solenoid valve connected with a circuit board that is fixed to a casing, and assembling the first assembly to the second assembly. The valve body of the solenoid valve is assembled to the coil portion of the valve, and the motor is assembled to the circuit board.

The other objects and features of this invention will become understood from the following description with reference to the accompanying drawings.

### BRIEF DESCRIPTION OF THE DRAWINGS

FIG. 1 shows a hydraulic circuit of a fluid pressure control device according to an embodiment of the present invention.

FIG. 2 shows a cross sectional view taken on line A1-A2 of FIG. 4 of the fluid pressure control device according to a first embodiment of the present invention.

FIG. 3 shows a cross sectional view taken on line A1-A1 or A1-A3 of FIG. 4 of the fluid pressure control device according to a first embodiment of the present invention.

FIG. 4 shows a front elevation of a housing of the fluid pressure control device according to a first embodiment of the present invention viewed from a casing.

FIG. 5 shows a front elevation of the casing of the fluid pressure control device according to a first embodiment of the present invention viewed from the housing.

FIG. 6 shows a side view of gear pump of a fluid pressure control device according to an embodiment of the present invention.

FIG. 7 shows a front view of gear pump of a fluid pressure control device according to an embodiment of the present invention.

FIG. 8 shows an exploded view of perspective illustration of the gear pump of a fluid pressure control device according to an embodiment of the present invention.

FIG. 9 shows a cross sectional view taken on line A1-A1 or A1-A3 of FIG. 4 of the fluid pressure control device as it appears during assembly thereof according to a first embodiment of the present invention.

FIG. 10 shows a fluid pressure control device according to a second embodiment of the present invention.

FIG. 11 shows a hydraulic circuit of a fluid pressure control device according to a third embodiment of the present invention.

FIG. 12 shows an exploded perspective view of structural of the third embodiment of the present invention.

FIG. 13 shows a partial sectional view of the third embodiment of the present invention.

FIG. 14 shows a back elevation of the third embodiment of the present invention.

### DETAILED DESCRIPTION OF THE INVENTION

Referring to the drawings, a description is made of embodiments of the present invention.

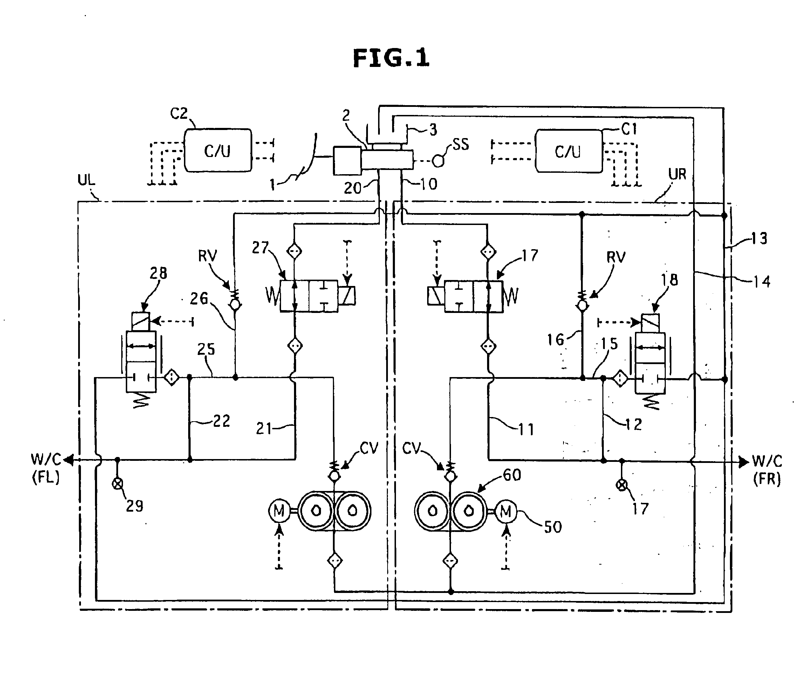

As seen in FIG. 1, a fluid pressure control device is applied as a brake-by-wire system for a motor vehicle. This embodiment is a front wheel only system. Of course, the fluid pressure control device can be applied as a rear wheel system or a different system.

A brake pedal 1 to be operated by a driver has a master cylinder 2 for generating a braking pressure. For example, the master cylinder can be a so-called tandem type master cylinder. The master cylinder 2 has a stroke simulator for simulating a brake stroke when a shut valve 17, 27 is closed. When the shut valve 17, 27 is open, the braking pressure can be supplied from the master cylinder 2 to each wheel cylinder W/C. Moreover, master cylinder 2 has a stroke sensor SS for sensing a stroke of the brake pedal 1.

A right path 10 for supplying a pressure of the master cylinder 2a to a right unit UR and a left path 20 for supplying a pressure of the master cylinder 2 to a left unit UL are connected with the master cylinder 2. Each of the right unit UR and the left unit UL have control units C1, C2 that control a solenoid valve and a motor for driving a gear pump 60 based on an output each kind of the sensors.

Next, the hydraulic circuit of this embodiment is described. A downstream of the right path 10 can be connected to the wheel cylinder W/C through a path 11 and through the shut valve 17, which is a normal open type solenoid valve. The path 11 has a pressure sensor 19 for sensing a wheel cylinder pressure. Detected pressure signals are transmitted to the control unit C1. Moreover, the path 11 has a forked path 12 that is connected to a path 15. A downstream of the path 15 is connected to a drain path 13 through a pressure decrease proportional valve 18, which can be a solenoid valve. The drain path 13 is connected to a reservoir tank 3. A check valve CV for allowing a flow of brake fluid from gear pump 60 is located on an upstream of the path 15. A forked path 16 is connected to the path 15. On the forked path 16, there is a relief valve RV. When wheel cylinder pressure is larger than a set maximum spring force of a spring of the relief valve RV, the relief valve RV is opened by pressure. Then brake fluid is drained to the reservoir tank 3. A suction path 14 also is connected to the reservoir tank 3. Brake fluid is supplied to the gear pump 60 through the suction path 14.

The path 10 of the right unit UR and the left path 20 of the left unit UL are the same design. The shut valve 17, the pressure decrease proportional valve 18, the right path 10 and the forked path 16 correspond to a shut valve 27, a pressure decrease proportional valve 28, left path 20, a path 21 and a forked path 22 of the left unit UL. In this embodiment, the motor 50 and the pump 60 of the right unit UR and the motor 50 and the pump 60 of the left unit UL are a same design. Therefore, the explanation refers to the motor 50 and the pump 60 of the right unit UR and the left unit UL by the same numerals.

### (Control of brake-by-wire)

When the brake-by-wire system is normal, the shut valve 17 between the master cylinder 2 and wheel cylinder W/C is closed.
The wheel cylinder pressure is increased if a user steps on the brake pedal 1. The stroke sensor SS detects a stroke, which is input to the control unit C1. The control unit C1 calculates a pressure corresponding to the stroke. The control unit C1 outputs a current signal to the motor 50 of the gear pump 60. The current signal is calculated by feedback based on the wheel cylinder pressure. A fluid pressure is generated by the gear pump 60. The pressure is supplied to the wheel cylinder W/C, which generates a braking force, through the check valve CV, the path 15 and the path 12. Moreover, the control unit C1 can send an output to the pressure decrease proportional valve 18, which controls the wheel cylinder pressure.
The wheel cylinder pressure is decreased when the brake pedal 1 is returned to its original position. The stroke sensor SS detects the stroke, which is input to the control unit C1. The control unit C1 calculates an amount of decreasing pressure corresponding to the stroke. The control unit C1 outputs a current signal (an amount of opening) to the pressure decrease proportional valve 18. The current signal is calculated by feedback based on the wheel cylinder pressure. The pressure decrease proportional valve 18 is opened based on the feedback, and the brake fluid of an inside of the wheel cylinder W/C is drained to the drain path 13 based on an amount of the valve opening. In this way, the wheel cylinder pressure is decreased to control the noise and the wheel cylinder pressure suitably, because the decrease of the wheel cylinder pressure is used by the pressure decrease proportional valve 18.

When brake-by-wire-system is defective, the shut valve 17 is opened, and the pressure decrease proportional valve 18 is closed. (Corresponding to energy from each valve) Then, the brake fluid can supply the wheel cylinder W/C with the brake fluid of the master cylinder 2 in order to generate a braking force.

### (Structure of a fluid pressure control device)

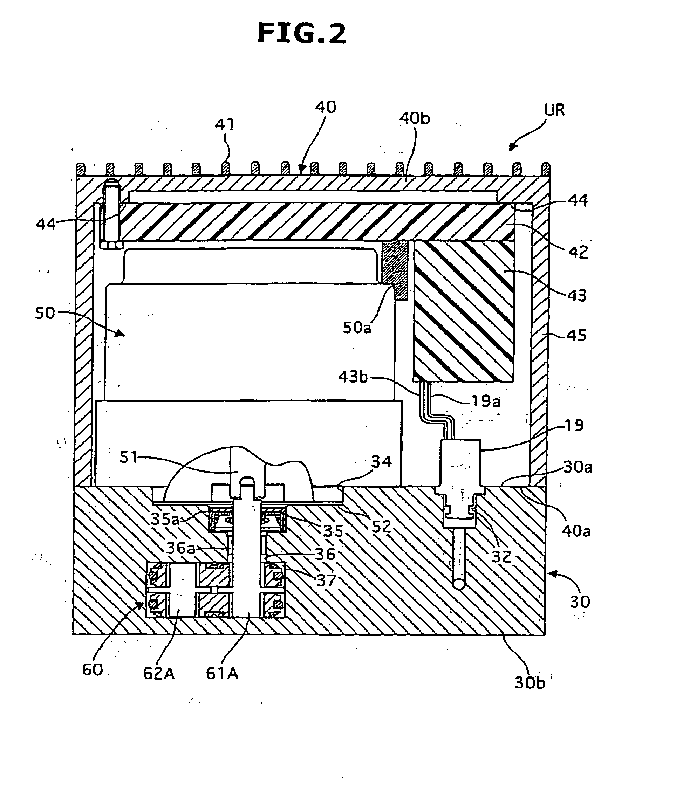

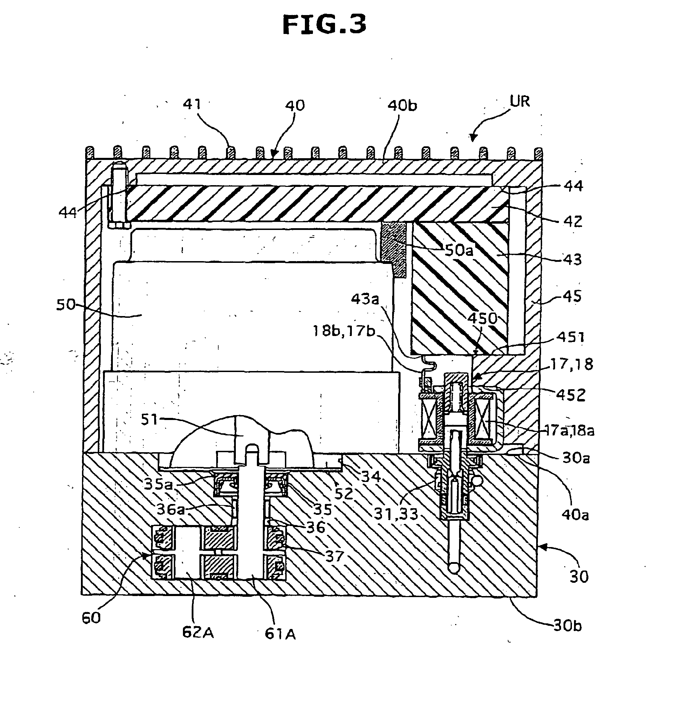

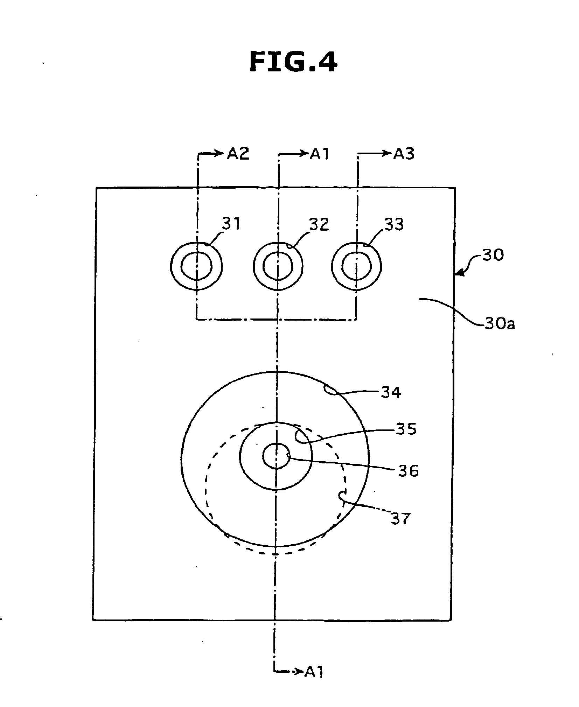

FIG. 2 is a cross sectional view taken on line A1-A1 of FIG. 4, of a portion of the fluid pressure control device. FIG .3 is a cross sectional view taken on either line. A1-A2 or A1-A3 of FIG. 4, of a portion of the fluid pressure control device. (See FIG. 3 and FIG. 4) The pressure control device includes a housing 30 having plural paths and a casing 40 covering the housing 30.

### (Regarding the housing 30)

The plural paths are drilled into the housing 30 to form a hydraulic circuit as seen in Fig. 1. In addition, the housing 30 has a cylinder hole 37 for placing the gear pump 60, a seal device hole 35 for placing a seal 35a, which provides sealing between a drive shaft 61A and the housing 30. Moreover, the housing 30 has a bearing hole 36 for placing a bearing 36a of the drive shaft 61A. The cylinder hole 37 is blocked by a blockage means (not shown) disposed at a side surface 30b or 30a when the gear pump 60 is installed into the cylinder hole 37. On the side surface 30a of the housing 30, which is at a side of the casing 40 is formed a valve hole 31 for placing the shut valve 17, a hole 32 for placing the pressure decrease proportional valve 18 and a hole 33 for placing the pressure sensor 19. The shut valve 17, the pressure decrease proportional valve 18 and the pressure sensor 19 are press-fitted to the side surface 30a at the holes toward the bottom of the housing 30 shown in FIG. 2.

In this manner, the press-fitted parts are disposed only on one side of the housing 30. Therefore, the housing 30 can use a side surface 30b as a support surface for preventing deformation of the housing 30. This improves the efficiency of manufacturing the housing 30. Accordingly, the side surface 30a also has a hollow portion 34 with a project portion 52 that forms a side of a motor housing of the gear pump 60 of the motor 50. In this manner, the motor 50, the shut valve 17, the pressure decrease proportional valve 18, and the pressure sensor 19 only are disposed on the side surface 30a.

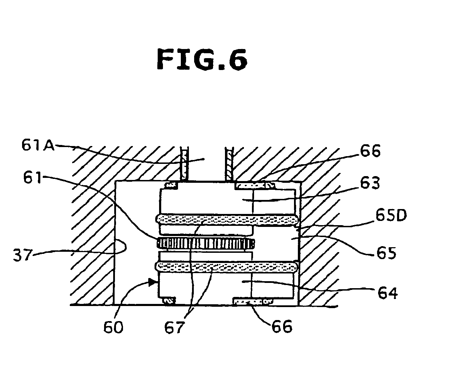

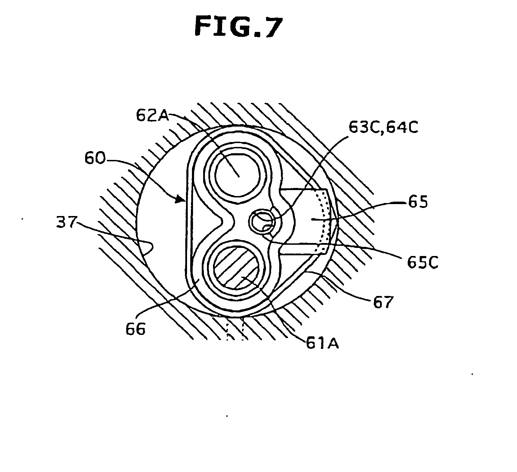

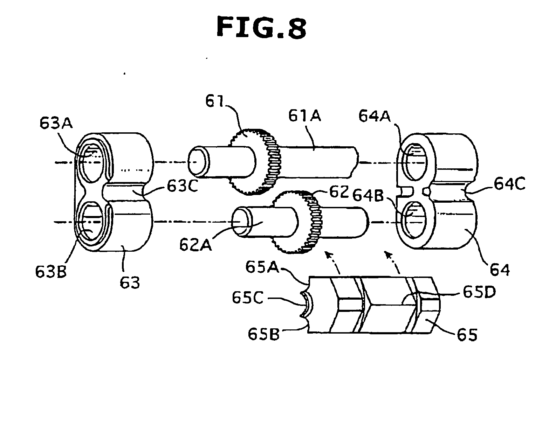

FIG. 6 is a side view of the gear pump 60, FIG. 7 is a top view of the gear pump 60 and FIG. 8 is an exploded view in perspective of the gear pump 60. As seen in FIG. 6 ~ FIG. 8, the gear pump 60 includes a drive gear 61 provided with a drive shaft 61A, a driven gear 62 provided with a driven shaft 62A, a pair of side plates 63, 64 disposed on both sides of the drive shaft 61A and driven shaft 62A, and a seal block 65. The drive shaft 61A is connected to a motor drive shaft 51 of the motor 50. One of the side plates 63 has support holes 63A, 63B provided for the drive shaft 61A and the driven shaft 62A, and the other of the side plate 64 also has support holes 64A, 64B. Therefore, each of the side plates 63, 64 is inserted onto the drive shaft 61A and driven shaft 62A from each side of the gears. As a result, the drive gear 61 and the driven gear 62 are rotatably supported for engagement with each other. The connection between the drive gear 61 and driven gear 62 is provided by rubbing between the gears and the side plates. Each side plate is made from a material with a high degree of hardness.

Arc shape notches 63C, 64C are disposed on a contact portion of the seal block of the side plates 63, 64, respectively. The notch 63C is between the support hole 63A and the support hole 63B. The notch 64C is between the support hole 64A and the support hole 64B. The notch 63C, 64C is formed on the side plates 63, 64. Seal rings 66 are disposed between the side plate 63 and the housing 30 and also between the side plate 64 and the housing 30. Seal ring 66 is constructed to provide a seal between the side plates 63, 64 and seal block 65.

Hollow curved surfaces 65A, 65B are formed in the seal block 65 at a side of the contact surface with the side plates 63, 64 along the tip of the teeth of the drive gear 61 and the driven gear 62. A groove 65C is formed on the seal block 65 at a location between the hollow curved surfaces 65A, 65B. The groove 65 has a portion that contacts notches 63C, 64C. A suction path is formed by the notches 63C, 64C and the groove 65C when the side plates 63, 64 and the seal block 65 are assembled detachably to one another by a coil spring 67. The seal block is made from an aluminum base that is softer than a material of the side plates 63, 64.

The gear pump 60 is disposed eccentrically with respect to the motor drive shaft 51. The drive shaft 61A is disposed between the driven shaft 62A and the solenoid valves 17, 18 and/or the pressure sensor 19. This improves the housing 30 efficiency.

### (Regarding the casing 40)

The casing 40 is explained based on FIG. 2, FIG. 3 and FIG. 5. The casing 40 is made from an aluminum base that is formed substantially as a rectangular parallelepiped tank having an opening portion 40a on a side of the housing 30. Purity fins 41 are formed on an outer surface of a bottom surface 40b of the casing 40. The fins can also be formed on other surfaces of the casing 40. Circuit boards 42, 43 are fixed to a first circuit support portion 44, disposed in an inner surface of the bottom surface 40b of the casing 40, using a screw. As seen in FIG. 3, a support portion 450 is formed on a side surface 45 of the casing 40, adjoining the shut valve 17, the proportion valve 18 and the pressure sensor 19. The support portion 450 projects to the inside of the casing 40. The support portion 450 of the side of the circuit board 43 is formed a second support portion 451 supporting a circuit board 43. The support portion 450 of the housing 30 is disposed on a coil support portion, for fixing and supporting coils 17a, 18a.

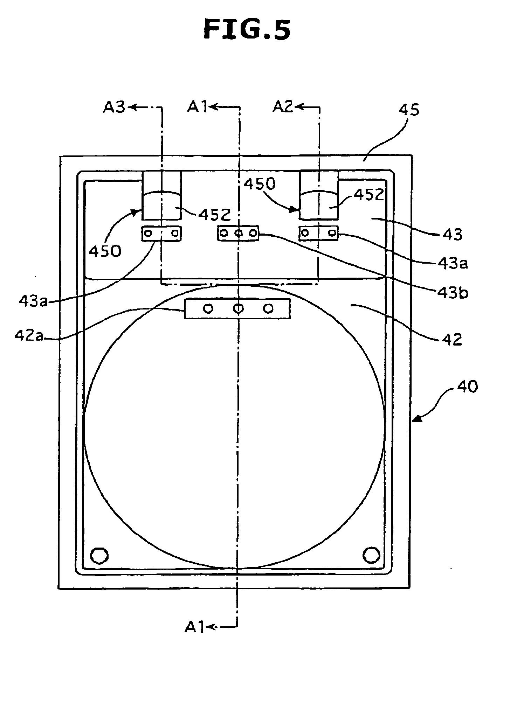

FIG. 5 is a front view of the casing 40 from the housing. The circuit board 42 has a motor harness connect portion 42a supplying an electric current to the motor 50, and the motor harness connect portion connecting a harness 50a for a rotation sensor. The circuit board 43 has a coil terminal connect portion 43a for supplying an electric current to coil terminals 17b, 18b of coils 17a, 18a, and a sensor harness connect portion 43b for connecting a sensor harness 19b for the pressure sensor 19. The harness 50a and a sensor harness 19b have a rigidity that can stand up to predetermined deforming. Coil terminals 17b, 18b can also provide rigidity.

Inside of circuit boards 42, 43 fixing to the bottom surface of the housing 30 disposed in the motor 50, shut valve 17, a driver of the proportion valve 18 and the control unit C1, A heat of circuit boards 42, 43 is dissipated heat efficiency through the fins 41 forming the out surface of the bottom 40b. Moreover, the casing 40 is made from an aluminum base that can raise low thermal conductivity.

A driver of the motor 50 produces a lot of heat. Therefore, it is desirable to dispose the driver so that it adjoins the bottom surface 40b, which has fins 41. In FIG. 2 and FIG. 3, a clearance is formed between the circuit board 42 and the bottom 40b. Moreover, the clearance decreases a contact area between the first circuit support portion 44 and the circuit board 42, which provides a heat sink.

The other hand, a heat of each solenoid valve 17, 18 is smaller than heat of the motor 50. The circuit board 43 is disposed between the motor 50 and the casing 40 of between each solenoid valve 17, 18 or the pressure sensor 19 and the casing 40. In that case, the device cans small using space to efficient.

### (Regarding the motor 50)

In this embodiment, the motor 50 is applied a brushless motor. In this embodiment as brake-by-wire system, the motor 50 is driven by brake pedal corresponding with an action of driver. Therefore, the motor 50 is required an endurance. To use a brush motor, a wear is unavoidable. Because the device uses the brushless motor. Then a switching element controlling the motor 50 based on signal of a rotation angle is disposed in a driver of the motor. Signal of rotation angle is a sensor or means for estimating.

### (Regarding to a first assembly and a second assembly)

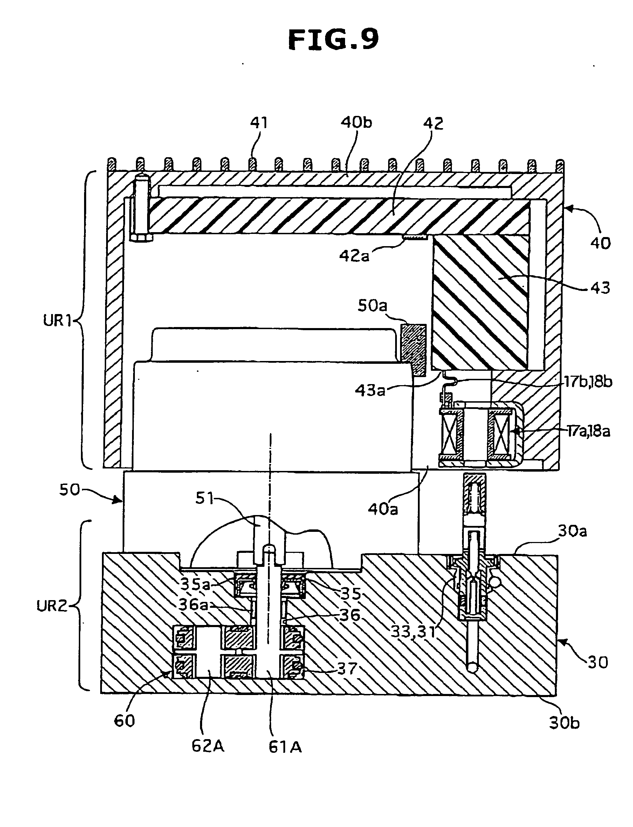

Next, regarding the first assembly UR1 and the second assembly UR2, FIG. 9 show the right unit UR that is divided into the first assembly and the second assembly. The casing 40, the circuit board 42, 43 fixing an inside of the casing 40 having the bottom 40b, the coil 17a of the shut valve 17 and the coil 18a of the pressure proportion valve 18 are assembled to the first unit UR. The coil terminal 17b, 18b of coil portion 17 , 18a are connected with the coil terminal connect portion 43a. In this way, the circuit board 43 and the coil portion 17a, 18a can dispose nearly, and then a path of wiring for wiring does not need providing specially. As a result, the first assembly UR1 can be easy to assemble. Above process defines process of a first assembly.

The housing 30, the gear pump assembling in the housing 30, a valve body VB of the shut valve 17 except the coil portion 17a press-fitting to the housing 30, a valve body VB of the proportion valve 18 except the coil portion 18a, the pressure sensor 19 and the motor 50 are assembled to the second assembly UR2. An assembly does not need a wiring when the second assembly UR2 is assembled. Then an efficient of assembly can improve. Above process defines process of a second assembly.

When the opening portion 40a of the first assembly UR1 is assembled to the second assembly UR2, a motor harness 50a of the motor 50 is connected with a motor harness connect portion 42a at the same time and the sensor harness 19a of the pressure sensor 19 is connected with the sensor harness connect portion 43b at the same time. By above process can form the right unit UR. Each valve 17, 18 is fixed to the housing 30 correspond with the direction of assembly and the axis of the valve body. In the matter, it can improve manufacturing efficiency, because of the process of first assembly and the process of second assembly can complete a connection of electric between each assembly. In above assembly process assembling with the first assembly and the second assembly define a process of assembly.

In this embodiment, an assembly process need only process of the first assembly, process of the second assembly and process of assembly, then fixing of each part and wiring can achieve to easy. It can improve manufacturing efficiency.

In this embodiment, it is easy to connect each part and the circuit board, because of the motor 50, circuit boards 42, 43, each solenoid valve 17, 18 and the pressure sensor 19 dispose on same side of the housing 30.

The casing 40 can use in common to each parts, because of the motor 50, circuit boards 42, 43, each solenoid valve 17, 18 and the pressure sensor 19 dispose on same side of the housing 30. Therefore, it can cut number of parts.

An efficient of heat sink can raise, because of circuit boards 42, 43 contact with the casing 40.

A surface area of the casing 40 can be enlargement, because of the cooling fin 41 is formed on an exterior of the casing. Therefore, an efficient of heat sink can raise.

The pump 60 has the drive gear 61 and the driven gear 62, each gear engage with each other. The drive gear 61 connects with the motor 50, and the drive gear 62 is disposed on an area that is between the driven gear 62 and the solenoid valve 17, 18. Therefore, the housing 30 can be compact.

The motor 50 has a brushless motor and a position sensor for detecting a position of rotor of the brushless motor. Therefore, a wire to connect to the circuit board 42 is increased. However, the motor 50 can connect easy with the motor harness 50, because of the circuit board 42 dispose adjacent to the motor 50.

Circuit boards 42, 43 connect with each part when the first assembly UR1 and the second assembly UR2 assemble, because of the first assembly UR1 and the second assembly UR2 are assembled along a same axis approaching each other. Therefore, it can improve performance or efficiency of assembly.

Performance or efficiency of assembly of the solenoid valves 17, 18 can improve further, because of direction of each axis of the solenoid valves 17, 18 and the pressure sensor 19 correspond with the direction of being assembled that is the first assembly UR1 and the second assembly UR2. Moreover, the motor 50 is fixed on the same side of the housing 30 which fixed the solenoid valves 17, 18 and the pressure sensor 19, and the coil portion is integrated with the circuit board correspond with the axis of the solenoid valves 17, 18.

Process of first assembly for assembling a pump, a motor for controlling the pump and a valve body of a solenoid valve fix to a housing. In addition, process of second assembly for assembling a coil portion of the solenoid valve connects with a circuit board that fix to casing. Then process of assembly for assembling when the first assembly is assembled to second assembly, the valve body of the solenoid valve is assembled to the coil portion of the valve and the motor is assembled to the circuit board. Therefore the fluid pressure control device can assemble easily.

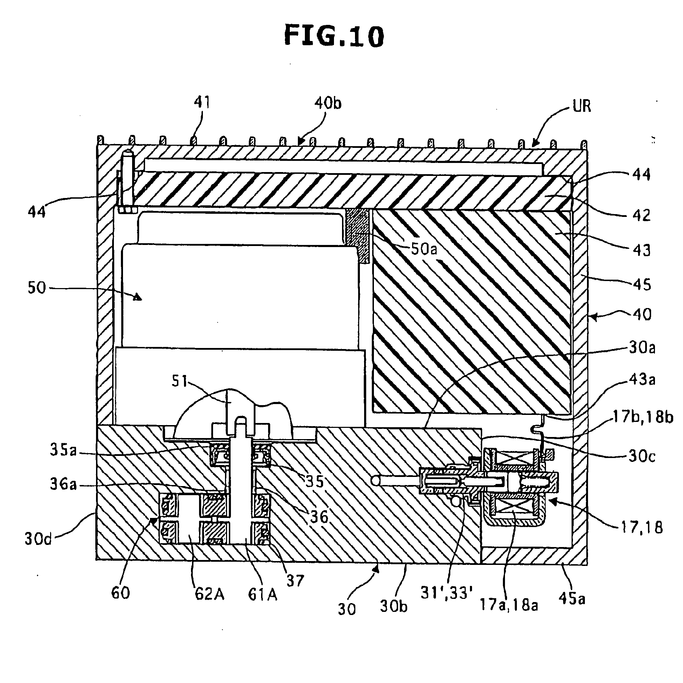

FIG. 10 shows a second embodiment of the present invention. In FIG. 10, like parts and portion to the above embodiment described with reference each FIG will be designated by like reference characters. There is situation that will not be described again for brevity. In the above embodiment, solenoid valves 17, 18 and the pressure sensor 19 are disposed on the side surface 30a. Concerning the above embodiment, in the second embodiment, solenoid valves 17, 18 and the pressure sensor 19 is disposed on a side surface 30b crossing the side surface 30a perpendicularly.

### (Regarding the structure of a fluid pressure control devise)

FIG .10 is a cross sectional view shows of the fluid pressure control device. The fluid pressure control device includes the housing 30 having a hydraulic circuit and the casing 40 covering the housing 30.

### (Regarding the housing)

The plural of path is drilled into the housing 30 for forming a hydraulic circuit as seen in Fig. 1. The housing 30 has a cylinder hole 37 for placing the gear pump 60, a seal device hole 35 for placing a seal 35a sealing between a drive shaft 61A and the housing 30. In addition, the housing 30 has a bearing hole for placing a bearing 36a of the drive shaft 61A. A valve hole 31' for placing the shut valve 17 and a hole 32' for placing the proportion valve 18 and a hole 33 for placing the pressure sensor 19 are disposed on the side surface 30b crossing the side surface 30a perpendicularly. The shut valve 17 and the proportion valve 18 and the pressure sensor 19 is press-fitted to the side surface 30b forming the each hole toward the left of the FIG. 10. In this manner, parts of press-fitted are disposed only on a one side of the housing 30. Because of the housing 30 can use a side surface 30d opposite to a side surface 30c as a support surface, for preventing deformation of the housing 30 and for improving an efficient of manufacturing.

### (Regarding the gear pump)

The gear pump 60 is disposed on eccentricity portion about the motor drive shaft 51 structural. The drive shaft 61A is disposed between the driven shaft 62A and solenoid valves 17, 18 and/or the pressure sensor 19. This is to improve a housing 30 efficiency.

### (Regarding the casing)

The casing 40 is made from an aluminum that is formed substantially a rectangular parallelepiped as a tank having an opening portion 40a on a side of the housing 30. An outer surface of a bottom surface 40b of the casing 40 is formed purity fins 41. The fins can form other surface of the casing 40. A first circuit support portion 44 fixing a circuit board 42, 43 is disposed in an inner surface of the bottom surface 40b of the casing 40, using a screw. The side surface 45 of the casing 40 adjoining the shut valve 17, the proportion valve 18 and the pressure sensor 19 is formed a cover surface 45a for covering solenoid valves 17, 18 and the pressure sensor 19.

### (Regarding to a first assembly and a second assembly)

Next, regarding the first assembly UR1 and the second assembly UR2. The casing 40, circuit boards 42, 43 fixing an inside of the casing 40 having the bottom 40b is assembled the first assembly device UR1. Above process defines process of a first assembly.

The housing 30, the gear pump assembling in the housing 30, the shut valve 17 except the coil portion 17a press-fitting to the housing 30, the proportion valve 18, the pressure sensor 19 and the motor 50 are assembled to the second assembly UR2. An assembly does not need a wiring when the second assembly UR2 is assemble. Then an efficient of assembly can improve..Above process defines process of a second assembly.

When the opening portion 40a of the first assembly UR1 is assembled with the second assembly UR2, A motor harness 50a of the motor 50 is connected with a motor harness connect portion 42a at the same time and the sensor harness 19a of the pressure sensor 19 is connected with the sensor harness connect portion 43b at the same time. In above process can form the right unit UR. In the matter, it can improve manufacturing efficiency, because of the process of first assembly and the process of second assembly can complete a connection of electric between each assembly. In above assembly process, assembling with the first assembly and the second assembly define a process of assembly.

In this embodiment, an assembly process need only process of the first assembly, process of the second assembly and process of the assembly, then fixing of each part and wiring can achieve to easy. It can improve manufacturing efficiency.

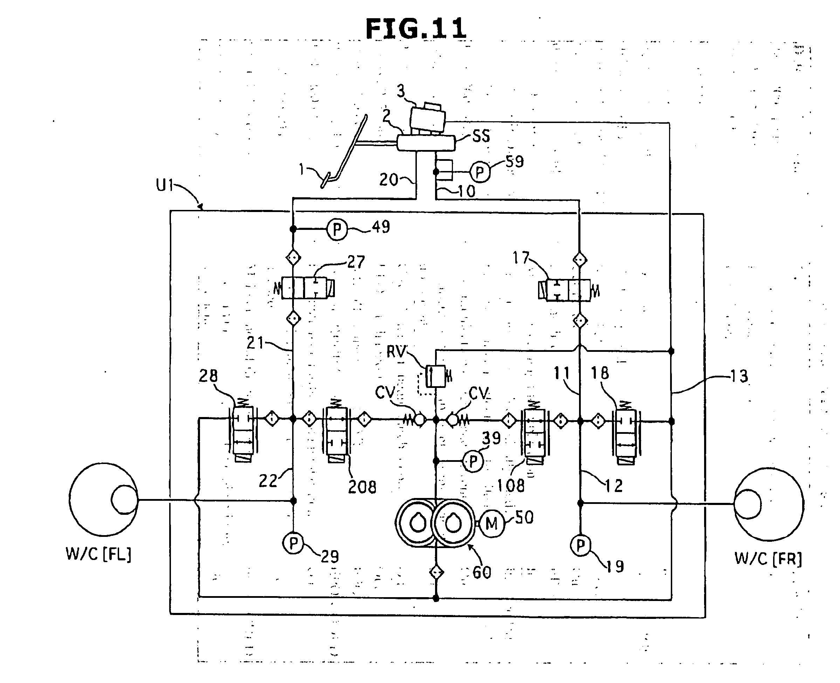

As seen in FIG. 11, that is fluid pressure control device apply for a brake-by-wire system of third embodiment for a motor vehicle. This embodiment indicates an only front wheel system. Of course, it can apply a rear wheel system or difference system. In FIG. 11 likes part and portions to those of the previous embodiment described with reference to FIGS 1 to 10 will be designated by like reference character and will be described only about different structure.

In the first embodiment, it has the left unit and the right unit separately. In the third embodiment, a brake unit U1 including a left and right can be increasing a pressure by a pump.

A pressure sensor 59 for detecting a master cylinder pressure is disposed on the right path 10 outside of brake unit U1 that is between the brake unit U1 and the master cylinder. A pressure sensor 49 for detecting the master cylinder pressure is disposed on the left pass 20 that is side of master cylinder of inside of brake unit U1. The master cylinder pressure is detected both an inside of brake unit U1 and an outside of the brake unit U1. In this way, it has redundancy that can detect the master cylinder pressure if one of the pressure sensors is failed. In addition, a pressure sensor 39 for detecting a pump pressure is disposed between the pump 60 and the heck valve CV.

An increase pressure proportional valve 108 for controlling a hydraulic pressure from the pump 60 is disposed on between the check valve CV and the path 12.
In addition, an increase pressure proportional valve 208 for controlling a hydraulic pressure from the pump 60 is disposed on between the check valve CV and the path 12.

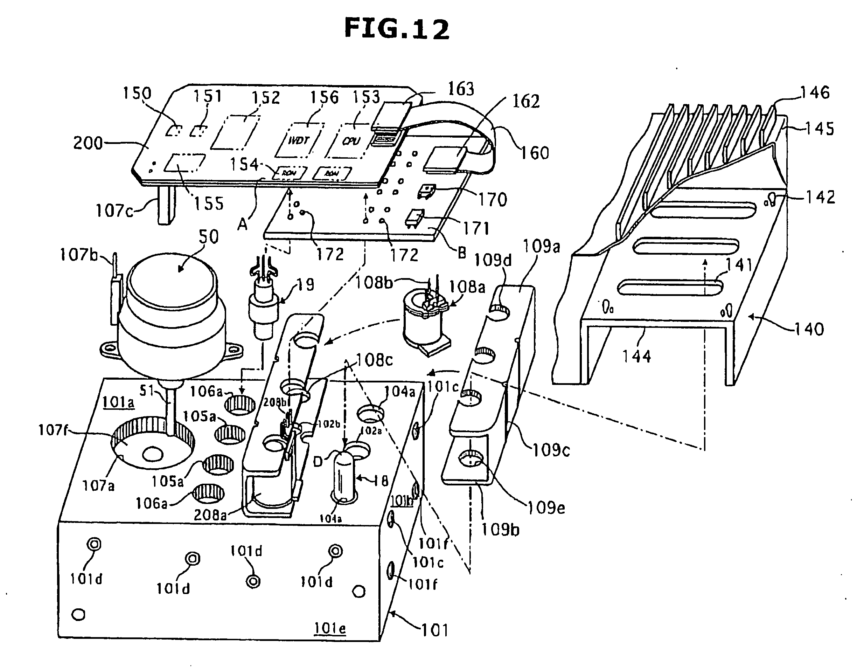

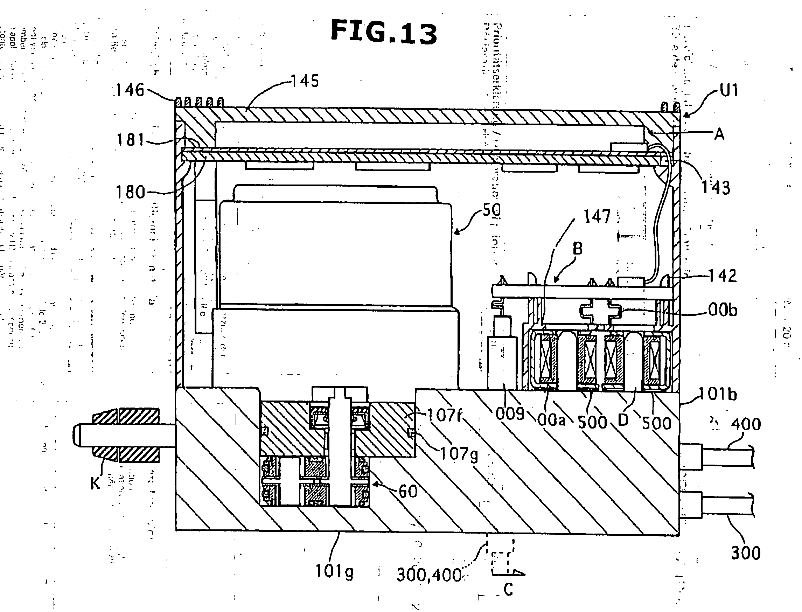

FIG. 12 shows an exploded perspective view of structural of the brake unit U1. In addition, FIG. 13 shows a partial sectional view of the brake unit U1. A housing 101 of the brake unit U1 having an upper surface 101b is mounted on a vehicle body as the upper surface 101b that become high position. Inlet ports 101c, 101f connecting an end portion of path (not shown) connecting to a master cylinder 2 and each wheel cylinder is formed at the upper surface 101b.

Valve halls 104a, 102a are bored a side surface of housing 101a. Pressure decrease proportional valves 18, 28 and the shut valve 17 are fixed to each valve hall 104a, 102a by caulking.

A valve hall 108c is bored at opposite portion of the valve hall 104a. Pressure increase proportional valves 108, 208 are fixed to each hall 108c by caulking. As a same, a valve hall 102b fixing the shut valve 27 by caulking is formed at opposite portion of the valve hall 102a.

An air mixed in brake fluid can be discharged to reservoir 3 immediately, because of a position of pressure decrease proportional valves 18, 28 are higher than the pressure increase proportional valves 108, 208 when the brake unit U1 is mounted on vehicle body.

Pressure increase proportional valves 108, 208, pressure decrease proportional valves 18, 28 and the shut valve 27 having a valve dome D are fixed to the housing 140 as projection the side surface of housing 101a by caulking.

A yoke 109 is integrated with for proportional pressure decrease valves 18, 28 and the shut valve 17. As same, a yoke 110 is integrated with for proportional pressure increase valves 108, 208 and the shut valve 27.

The yoke 109 is formed longly that along a line of pressure decrease proportional valves 18, 28 and the shut valve 17 and are formed cross section such as U-shaped. A width of upper portion of the yoke 109a is formed shorter than a width of lower portion of the yoke 109b. Moreover, coil terminals 17b, 18b, 108b and 208b of each solenoid 17a, 18a, 108a, and 208a are completely disposed on along each solenoid line as each coil terminal is opposite each other. Coil terminals 17b, 18b, 108b and 208b are collectively called a coil terminal 00b. Each solenoid 17a, 18a, 108a, and 208a are collectively called a solenoid 00a. In this way, when the solenoid 00a is attached to the yoke 109, the coil terminal 00b can avoid to contact with yokes 109, 110.

Opening halls 109b, 109e for installing the valve dame D are formed the upper portion of yoke 109a and the lower portion of yoke 109b.

A slit 109c that is along corresponded to electromagnetic force line is formed between each adjoining valves. In this manner, the electromagnetic force line being occurred one of solenoid 00a does not influence to another solenoid 00a through the yoke 109.

The solenoid 00a is preassembled to the yoke 109 under a center of inner diameter of solenoid 00a correspond with a center of opening halls 109d, 109e and that the coil terminal 00b projects from an end portion of the upper portion of yoke 109a. As mentioned above, the coil terminal 00b is completely disposed on along each solenoid line as each coil terminal are opposite each other. Therefore, each solenoid 00a can be assembled to side direction of the yoke 109 under maintaining line up the solenoid 00a. In this way, the solenoid 00a is assembled to the yoke 109 easily.

Next, each opening hall 109d, 109e of an assembled yoke 109 is installed to each valve dome D projecting from the side surface of the housing 101a.

It is to be desired that an elastic member 500, 500 such as a leaf spring put on between the side surface of the housing 101a and yokes 109, 110. In this manner, a casing 140 and yokes 109, 110 can be assembled tightly fitting each other. It can be absorbed that is a vibration of vehicle and a load of assembling the casing 140 against yokes 109, 110.

A description of pressure increase proportional valves 108, 208 against the shut valve 27 abbreviate because the yoke 110 has same structure about the yoke 109.

Each of pressure sensors 19, 29, 39, 49 for detecting a pressure of brake fluid are press fitted into opening halls 105a, 106a that are formed to the side surface 101a. Pressure sensors 19, 29, 39 and 49 are collectively called a pressure sensor 009.

The gear pump 60 same as from FIG. 6 to FIG. 8 that is built into the housing 101 from an opening hall 107a being formed the surface of the housing 101a. After the gear pump locate at predetermine position, a seal ring 107g (see FIG. 13) is around outer surface of a pump cover 107f. Then the pump cover 107f is attached to an opening hall 107a of the housing. In the meantime, the motor drive shaft 51 of the motor 50 is connected to the drive shaft 61A.

An outer portion of the brushless motor 50 has a connector 107b as terminal for electrical connection of the motor 50 extending from the outer portion. The connector 107b is connected with a connector 107c of a main circuit board A say upon later.

It is to be desired that connectors 107b, 107c are disposed on a side of brush less motor on the main circuit board A. Said side is surface opposite that surface placing sub assembled yokes 109, 110, a CPU 153, a watchdog timer(WDT) 156 or EEPROM 154 say upon later.(As follows collectively called circuit component)

In this structure, connectors 107b, 107c are disposed away from both the solenoid 00a and the circuit component. Therefore, if radio noise that is produced by the brushless motor 50 leaks through connectors 107b, 107c, the radio noise does not influence to the solenoid 00a and the circuit component. As a result, an exact brake control can obtain. A position sensor for detecting a rotor of the brushless motor can dispose on a side of connectors 107b, 107c or the pressure sensor 009. When the position sensor disposed on the side of the pressure sensor, an exact detected value for providing to the brushless motor 50 can obtain without influence of the radio noise.

There are forming drill-opening hall 101d for forming a hydraulic circuit at a flank surface 101e of the housing 101. The drill-opening hall 101d forming the hydraulic circuit is sealed by thing such as balls by press fit after the drill step.

A casing 140 is formed a box-shape that can install the main circuit board A, a sub-circuit board B, assembled yokes 109, 110 and the brushless motor 50. For example, it is made from resin.

A cover 145 is fixed to a side surface of the casing 140 by thing such as a bolt. The cover 145 is made from aluminum and is formed a fin 146 on an outer surface thereof. In this manner, the cover 145 can obtain a function of a radiator for that installed the main circuit board A the sub-circuit board B and the brushless motor 50.

A space of a box-shape 144 for storing yokes 109, 110 is formed inside of the casing 140. A sideboard 147 contacting the upper portion 109a of the yoke is integrated with the casing 140 by molding.

Oval halls 141 extending to along a line of between shut valves 17, 27, line of between the pressure decrease proportional valve 18 and the pressure increase proportional valve 108 and line of between the pressure decrease proportional valve 28 and the pressure increase proportional valve 208 are formed to the side board 147. Hereby, the coil terminal 00b can project to upside of the sideboard 147 when the casing 140 is attached to the housing 101.

A snap-in fit 142 is formed to an upper side surface of a side of the circuit board of the sideboard 147. The sub-circuit board B can fix to the casing 140 in state that is a flexible of a permissible range by a function of clip by the snap-in fit 142.

The sub-circuit B that is extending from the sideboard 147 to side of the brushless motor 50. It is an electrical connection with a terminal of the pressure sensor 009 by solder or bonding. In other way, the sub circuit board B and the pressure sensor 009 can connect by a connector. In this manner, an efficiency of assembly is improvement.

A driver 171 of the pressure sensor 009 and pressure decrease proportional valve 18, 28, pressure increase proportional valves 108, 208 and shut valves 17, 27 of a driver 170(FET) is disposed on the sub-circuit board B. Moreover, terminal halls 172 for electrical connecting with each driver are formed to the sub-circuit board B. The coil terminal 00b insert to the terminals halls 172 for connecting by solder or bonding.

The coil terminal 00b is connected to the sub circuit board separate from the main circuit board by solder or bonding. In this manner, the main circuit board A does not need a part prohibiting portion of placement of component for avoiding a thermal of solder or bonding. In addition, a thermal by solder or bonding does not influence to the main circuit board A. Therefore, the main circuit board A can be miniaturization or small. In addition, the main circuit board A ensures reliability of circuit board for receiving of thermal by solder or bonding concerning the other component.

A relatively small heating value component is desirable to dispose on the sub-circuit board B because the sub-circuit board B is disposed into inside of middle of the brake unit U1 as seen in FIG. 11. In short, power components of pressure decrease proportional valves 18, 28 or pressure increase proportional valves 108, 208 having a low temperature for action compete with a power component of the brushless motor 50 is disposed on the sub-circuit board B.

A diode 151 for connection with a battery contrary and a driving component (FET) 150 of the motor 50 are disposed on a one side of the main circuit board A. A base plate 181 for heat sink is buried the other side of the main circuit board A. For example, the base plate is likeable making from aluminum. The driving component 150 is connected with a DC-DC converter 152 as a step-up circuit that is electrical connected with a connector 107c. The connecter 107c is connected with a connecter 107b disposing on the brushless motor 50.

The surface disposing the diode 151, the driving component 150 and DC-DC converter 152 (As follows collectively called power component) of the main circuit board A is disposed toward to lower direction as seen in FIG. 11 or FIG. 12. In other words, the surface disposing the power component of the main circuit board A face to the brushless motor 50. A portion of a periphery of the main circuit board A is fixed to the casing 140 by a snap-in fit 143 forming the casing 140. (As seen in FIG. 13)

In addition, the base plate 180 of the main circuit board A is contacted to the cover 145 through a contact surface 181. In this manner, an effective heat sink can be obtained because of a heating value of the power component is transferred to the cover through the contact surface 181.

A CPU 153 for controlling the brake unit U1, the watchdog timer 156(WDT) and EEPROM 154 are disposed on the face that opposite to the sub circuit board B. These components avoid a thermal influence of the power component to dispose on the side of the sub-circuit board B of the main circuit bored A. Because of these components have low temperature for action that compare with a power component. In this manner, these components avoid a thermal influence of the power component.

The main circuit board A and the sub-circuit board B are connected with electro icy by a flexible printed circuit (FPC) 160. Connectors 162, 163 are structured between each circuit board and the FPC 160. In this manner, it can keep flexibility connection that can keep strong and reliability about a vibration and a shock. After the bonding step that assembles with the sub circuit board and assembled yokes 109, 110, an automation of the bonding step of the sub-circuit board B is easy, because the main circuit board can assemble the casing 140.

From a point of view about an automation of the step of the bonding, the connector disposing on the sub-circuit board B and end portion of the FPC are not only connection using the connector but also using a bonding electricity. Moreover, the main circuit board A and the sub-circuit board B can connect integral beforehand.

In the above, in the third embodiment that the sub-circuit board B is fixed to the sideboard 147 of the casing 140 by the snap-in fit 142. After that, the main circuit board A and sub-circuit board B can connect electricity because it accepts a connection using the connector. In this manner, the working efficiency of assembling improves.

When the main circuit board A and the sub-circuit board B connect electricity, can use a plug forming toward direction of perpendicular form to the sub-circuit board B. In this case, electricity connection between circuit boards can complete at the same time that the main circuit board A fix to the casing 140.

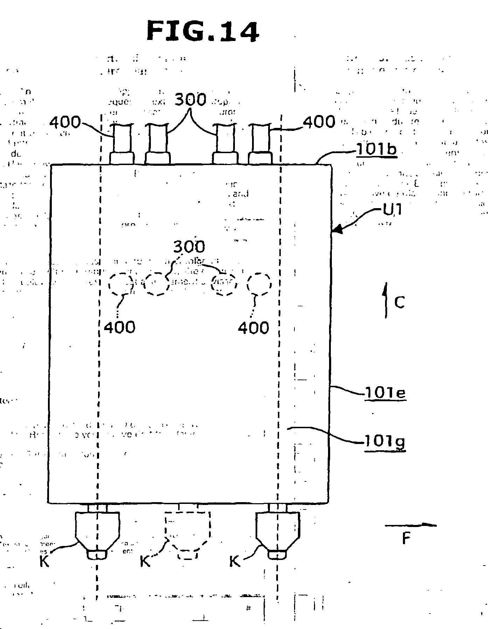

The brake unit U1 is mounted on the vehicle body along an arrow C of FIG. 13. The direction of the arrow C directs a side of upper of vehicle. A brake line 300 that is side of the master cylinder and a brake line 400 that provide to each W/C is connected with the upper surface 101b of the housing 101. A pin K to be made from rubber for mounting on the vehicle body can dispose separately two portions along F in FIG. 14 or can dispose to on one portion substantial center of the brake unit U1. When the pin K dispose two portions, each brake line 300, 400 are desirable to mount between pins K. In this manner, a vibration of each bake line 300, 400 can decrease.

The brake unit U1 is mounted on the vehicle body following step. At first pressure decrease proportional valves 18, 28, pressure increase proportional valves 108, 208 shut valves 17, 27 and the pressure sensor 009 are assembled from the side surface 101a, after that, the brushless motor 50 having the heaviest weight is assembled to the lowest portion of the housing 101. By this manner, an oscillation of the brake unit U1 by vehicle vibration can decrease as soon as possible. Moreover, property of a noise and vibration can solve profitable because the vibration that to transmit to the master cylinder 2 is decreased.

The pressure sensor 009 does not be influenced of vibration and does not be influenced to connection between the sub circuit board and thereof because the pressure sensor 009 is disposed on a center of the housing 101 relatively.

As other embodiment regarding the main circuit board A and the sub-circuit board B, a pattern of the main circuit board A and the sub-circuit board B that is buried in each circuit board are stamped. In addition, the main circuit board A and the sub circuit board B can integrate with each other by inserting a pattern into each circuit board. In this case, it can be obtained a high heat sink efficiently with a heat sink of the cover 145 because a resin as insulator can use a board having a high thermal conductivity.

As other embodiment regarding the power component, it can obtain an efficient heat sink because of the diode 151, the driving component 150, DC-DC converter 152 can dispose on the main circuit board A toward to the fin 143. Namely, an ambient temperature of an opposite surface of the cover 145 of the main circuit board A is high relatively because of the power component having wide temperature compensation is disposed on it. However, a heating value (about 105) of the power component is heat sink efficiently through the cover 145 because of these power components having wide temperature compensation is disposed on the cover as a heat sink portion. For reason by, a reliance of the power component is improvement.

As other embodiment regarding the power component, a component having an exceedingly heat value such as DC-DC converter 152 can contact or pick directly or indirectly with the cover 145. In this manner, the DC-DC converter 152 and the main circuit board A can connect electricity with each other by bonding or a connector. In this embodiment, a heat sink of the DC-DC converter 152 is improved, and it can prevent opportunity an influence toward other component.

As other embodiment regarding location of the pressure sensor 009 for detecting a pressure of the master cylinder 2 and wheel cylinder W/C, the pressure sensor 009 can dispose on the side surface of housing 101a being an out side of assembled yoke 109, namely, a side of inlet ports 101c, 101f. According this embodiment, a brake lines in the housing is simplification and can become smaller because of the pressure sensor 009 can dispose on a nearest point near at an object to be detected of pressure.

An influence of a brake fluid stiffness such as absorbing a pressure of a brake fluid is decreased as soon as possible because of the pressure sensor 009 can dispose on the brake lines that are near at an object to be detected of pressure as the master cylinder 2 and the wheel cylinder W/C. Thus, a brake control performance is improved because of an exact pressure value of the master cylinder 2 and the wheel cylinder W/C can detect.

As other embodiment regarding brake lines 300, 400, in FIG. 13, 14 that have shown in dotted lines the brake lines can connect with a side surface 101g of the housing 101. In that time, brake lines 300, 400 prefer to dispose on a surface of the housing 140 that neighboring an opposition to the pressure sensor 009. By this manner, an influence of a brake fluid stiffness such as absorbing a pressure of a brake fluid is decreased as soon as possible. In addition, brake lines 300, 400 of this embodiment have advantages to the vibration of the brake unit U1 being caused by the driving of the brushless motor 50, brake control such as pressure increasing, decreasing, or holding to the wheel cylinder W/C and vehicle running.

Namely, a connecting portion that is connected to the brake lines and the housing 101 is located near the center of gravity of the housing or near the side surface 101g when the brake unit U1 is mounted on the vehicle. Because vibration of the brake unit U1 such as an oscillation of the brake unit U1 giving to brake lines 300, 400 are decreased as soon as possible. By this manner, a noise and vibration in the cabin are decreased certainly, an influence of a vibration of the brake fluid that occurred by a solenoid valve such as the proportional valve being installed the brake unit U1 is decreased.

The invention is not limited to the embodiments described above. For example, the right unit UL and the left unit UL can integrate a one unit including a motor and plural solenoid valves. In addition, it can apply a rear wheel system. Moreover, the fluid pressure control device can apply a power steering system.

Moreover, this invention includes technical idea such as following.

The fluid pressure control device, includes a housing 101 including a hydraulic circuit, the pump 60 built into the housing 101, a motor 50 for driving the pump 60, the main circuit board A for controlling the motor 50, the solenoid valve 17, 18, 27, 28, 108, 208 for changing an amount of venting of the hydraulic circuit and a sub-circuit board B for driving the solenoid valve 17, 18, 27, 28, 108, 208. The motor 50, the main circuit board A, the solenoid valve 17, 18, 27, 28, 108, 208 and the sub-circuit board B are disposed on a side surface 101a of the housing 101. The main circuit board A is disposed near the cover such that the cover opposes the side surface. The sub-circuit board B is disposed between the main circuit board A and the solenoid valve 17, 18, 27, 28, 108, 208.

In thus manner, each circuit board can be small, a component to be avoiding an influence of thermo such as solder and boding and a component to need solder and bonding can dispose on several circuit board because circuit board A and the sub circuit board B is disposed separately. As a result, the high reliance fluid pressure control device can provide without an influence of thermo to component by solder and bonding.

In addition, the casing 140 includes a main portion surrounding the motor 50; the main circuit board A, the solenoid valve 17, 18, 27, 28, 108, 208, the sub-circuit board B and the cover 145 covering the main portion. And the main circuit board A is disposed near the cover.

A heat sink of the main circuit board A can be obtained through the cover 145.

In addition, the cover 145 is made from a metal, and the main circuit board A contact with the cover 145.

In such way, a heat sink of the main circuit board A can be obtained furthermore through the cover 145 being made from a metal.

The fluid pressure control device includes the housing 101 having a hydraulic circuit, the pump 60 built into the housing 101, the motor 50 for driving the pump 60, the main circuit board A for controlling the motor 50, the connectors 107b ,107c for connecting with the motor 50 and the driving component electric and the solenoid valve 009 for changing amount of vent of the hydraulic circuit. And the motor 50, the main circuit board A and the solenoid valve 17, 18, 27, 28, 108, 208 is disposed on the side surface 101a of the housing 101. Connecters 107b, 107c are disposed on the motor 50 opposite the solenoid valve 17, 18, 27, 28, 108, 208.

Connecters 107b, 107c are disposed to have enough distance the solenoid valve 009 or the component. If the radio noise occurred by the motor 50 is leaked, the radio noise cannot influence to the solenoid valve 009 and the component.

The entire contents of Japanese Patent Application P2004-156303 filed May 26, 2004 and the entire contents of Japanese Patent Application P2005-115642 filed April 13, 2005 are incorporated herein by reference.

Although the invention has been described above by reference to certain embodiments of the invention, the invention is not limited to the embodiments described above. Modifications and variations of the embodiments described above will occur to those skilled in the art in light of the above teachings. The invention is defined with reference to the following claims.

## Claims

1. A fluid pressure control device, comprising:
a housing (30, 101) including a hydraulic circuit;
a pump (60) built into the housing (30, 101);
a motor (50) for driving the pump (60);
a circuit board (42, A) for controlling the motor (50); and
a solenoid valve (17, 18, 27, 28, 108, 208) for changing an amount of venting of the hydraulic circuit,
**characterised in that** the motor (50), the circuit board (42, A) and the solenoid valve (17, 18, ) are disposed on a same side of the housing (30a, 101a).

2. The fluid pressure control device as claimed in claim 1, further comprising a casing (40,140),
wherein the motor (50), the circuit board (42, A) and the solenoid valve (17, 18, 27, 28, 108, 208) are covered by the casing (40,140).

3. The fluid pressure control device as claimed in claim 2, wherein the circuit board (42, A) is in contact with the casing (40,140).

4. The fluid pressure control device as claimed in claim 3, wherein a cooling fin (41, 146) is formed on an exterior of the casing (40, 140).

5. The fluid pressure control device as claimed in claim 1, wherein the pump (60) has at least one drive gear and at least one driven gear, the drive gear (61) engages the driven gear (62);
the drive gear (61) is connected to the motor (50); and
the drive gear (60) is disposed on an area that is between the driven gear (62) and the solenoid valve(17, 18, 27, 28, 108, 208).

6. The fluid pressure control device as claimed in claim 5, further comprising a casing (40, 140),
wherein the motor (50) and the circuit board (42, 43, A, B) and the solenoid valve (17, 18, 27, 28, 108, 208) are covered by the casing (40, 140).

7. The fluid pressure control device as claimed in claim 6, wherein the circuit board (42, 43, A, B) is in contact with the casing (40, 140).

8. The fluid pressure control device as claimed In claim 7, wherein a cooling fin (41, 146) is formed on an exterior of the casing (40, 140).

9. The fluid pressure control device as claimed as claim 1, wherein the motor (50) includes a brushless motor and a position sensor; and
the sensor detects a position of a rotor of the brushless motor.

10. The fluid pressure control device as claimed in claim 9, further comprising a casing (40, 140),
wherein the motor (50), the circuit board (42, 43, A, B) and the solenoid valve (17, 18, 27, 28, 108, 208) are covered by the casing (40, 140).

11. The fluid pressure control device as claimed in claim 9, wherein the pump (60) has at least one drive gear (61) and at least one driven gear (62), the drive gear (61) engages the driven gear (62);
the drive gear (61) is connected to the motor (50); and
the drive gear (61) is disposed on an area that is between the driven gear (62) and the solenoid valve (17, 18, 27, 28, 108, 208).

12. The fluid pressure control device as claimed in claim 1, further comprising a pressure sensor (19, 29, 009) for detecting a pressure of the hydraulic circuit,
wherein the pressure sensor (19, 29, 009) is disposed on the same side of the housing (30a, 101a).

13. The fluid pressure control device as claimed in claim 12, further comprising a casing (40, 140),
wherein the motor(50), the circuit board (42, 43, A, B), the solenoid valve (17, 18, 27, 28, 108, 208), and the pressure sensor (19, 29, 009) are covered by the casing (40, 140).

14. A fluid pressure control device as claimed in claim 1, further comprising:
a sub-circuit board (B)for driving the solenoid valve (17, 18, 27, 28, 108, 208),
wherein the motor (50), the main circuit board (A), the solenoid valve and the sub-circuit board (B) are disposed on a side surface of the housing(101a);
wherein the main circuit board (A) is disposed near the cover such that the cover opposes the side surface (145); and
the sub-circuit board (B) is disposed between the main circuit board (A) and the solenoid valve (17, 18, 27, 28, 108, 208).

15. The fluid pressure control device as claimed in claim 14, wherein the casing (140) includes a main portion surrounding the motor; the main circuit board (A), the solenoid valve (17, 18, 27, 28, 108, 208), the sub-circuit board (B) and the cover (145) covering the main portion,
wherein the main circuit board (A) is disposed near the cover (145).

16. The fluid pressure control device as claimed in claim 15, wherein the cover (145) is made from a metal,
wherein the main circuit board (A) is in contact with the cover (145).

17. A fluid pressure control device, comprising:
a casing (40, 140);
a housing (30, 101) including a hydraulic circuit;
a pump (60) built into the housing (30,101);
a motor (50) for driving the pump (60);
a circuit board (42, A) for controlling the motor (50);
a solenoid valve (17, 18, 27, 28, 108, 208) for changing an amount of venting of the hydraulic circuit;
a first assembly (UR1) including the solenoid valve (17, 18, 27, 28, 108, 208) and the motor (50), which are attached to a same side of the housing (30a ,101a); and
a second assembly (UR2) including the circuit board (42, 43, A, B), which is fixed to the casing (40, 140),
wherein the first assembly (UR1) and the second assembly (UR2) are assembled each other along a same axis; and
wherein the circuit board (42, 43, A, B), the motor (50), and the solenoid valve (17, 18, 27, 28, 108, 208) are assembled by assembling the first assembly (UR1) to the second assembly (UR2).

18. The fluid pressure control device as claimed in claim 17, wherein the solenoid valve (17, 18, 27, 28, 108, 208) comprises a valve body (VB) and a coil portion(17a, 18a, 27a, 28a, 108a, 208a);
the valve body (VB) is fixed to the housing (30, 101), an axis of the valve body (VB) corresponds to the same axis, and the motor (50) is fixed on the same side of the housing (30a, 101a) that is fixed to the valve body (VB); and
the coil portion (17a, 18a, 27a, 28a 107a, 108a) is integrated with the circuit board (42, 43, A, B) and corresponds with the axis of the valve body (VB).

19. The fluid pressure control device as claimed in claim 17, further comprising a pressure sensor (19, 29, 009) for detecting a pressure of the hydraulic circuit,
wherein the pressure sensor (19, 29, 009) is fixed the first assembly (UR1), and the pressure sensor (16, 29, 009) is assembled with the circuit board (42, 43, A, B) by assembling the first assembly (UR1) to the second assembly (UR2).

20. A method of assembling a fluid pressure control device, comprising:
processing a first assembly by assembling a pump (60), a motor (50) for controlling the pump (60) and a valve body of a solenoid valve (VB) fixed to a housing (30, 101);
processing a second assembly by assembling a coil portion of the solenoid valve (17a, 18a, 27a, 28a, 108a, 208a) connected with a circuit board (42, 43, A, B) that is fixed to a casing (40, 140); and
assembling the first assembly (UR1) is assembled to second assembly (UR2), the valve body of the solenoid valve (VB) being assembled to the coil portion of the valve (17a, 18a), and the motor (50) being assembled to the circuit board (42, 43, A, B).

## Patentansprüche

1. Fluiddruck-Steuervorrichtung, umfassend:
ein Gehäuse (30, 101) mit einem Hydraulikkreislauf;
eine Pumpe (60), die im Gehäuse (30, 101) eingebaut ist;
einen Motor (50) zum Antreiben der Pumpe (60);
eine Platine (42, A) zum Steuern des Motors (50); und
ein Magnetventil (17, 18, 27, 28, 108, 208) zum Verändern einer Entlüftungsmenge des Hydraulikkreislaufs,
**dadurch gekennzeichnet, dass** der Motor (50), die Platine (42, A) und das Magnetventil (17, 18) auf einer gleichen Seite des Gehäuses (30a, 101 a) angeordnet sind.

2. Fluiddruck-Steuervorrichtung nach Anspruch 1, ferner umfassend eine Ummantelung (40, 140), wobei der Motor (50), die Platine (42, A) und das Magnetventil (17, 18, 27, 28, 108, 208) von der Ummantelung (40, 140) bedeckt sind.

3. Fluiddruck-Steuervorrichtung nach Anspruch 2, wobei die Platine (42, A) mit der Ummantelung (40, 140) in Kontakt ist.

4. Fluiddruck-Steuervorrichtung nach Anspruch 3, wobei eine Kühlrippe (41, 146) auf einer Außenseite der Ummantelung (40, 140) ausgebildet ist.

5. Fluiddruck-Steuervorrichtung nach Anspruch 1, wobei
die Pumpe (60) zumindest ein Antriebszahnrad und zumindest ein angetriebenes Zahnrad umfasst, wobei das Antriebszahnrad (61) mit dem angetriebenen Zahnrad (62) in Eingriff ist;
das Antriebszahnrad (61) mit dem Motor (50) verbunden ist; und
das Antriebszahnrad (61) in einem Bereich angeordnet ist, der zwischen dem angetriebenen Zahnrad (62) und dem Magnetventil (17, 18, 27, 28, 108, 208) liegt.

6. Fluiddruck-Steuervorrichtung nach Anspruch 5, ferner umfassend eine Ummantelung (40, 140), wobei der Motor (50) und die Platine (42, 43, A, B) und das Magnetventil (17, 18, 27, 28, 108, 208) von der Ummantelung (40, 140) bedeckt sind.

7. Fluiddruck-Steuervorrichtung nach Anspruch 6, wobei die Platine (42, 43, A, B) mit der Ummantelung (40, 140) in Kontakt ist.

8. Fluiddruck-Steuervorrichtung nach Anspruch 7, wobei eine Kühlrippe (41, 146) auf einer Außenseite der Ummantelung (40, 140) ausgebildet ist.

9. Fluiddruck-Steuervorrichtung nach Anspruch 1, wobei der Motor (50) einen bürstenlosen Motor (50) und einen Positionssensor umfasst und der Sensor eine Position eines Rotors des bürstenlosen Motors erfasst.

10. Fluiddruck-Steuervorrichtung nach Anspruch 9, ferner umfassend eine Ummantelung (40, 140), wobei der Motor (50), die Platine (42, 43, A, B) und das Magnetventil (17, 18, 27, 28, 108, 208) von der Ummantelung (40, 140) bedeckt sind.

11. Fluiddurck-Steuervorrichtung nach Anspruch 9, wobei die Pumpe (60) zumindest ein Antriebszahnrad (61) und zumindest ein angetriebenes Zahnrad (62) umfasst, wobei das Antriebszahnrad (61) mit dem angetriebenen Zahnrad (62) in Eingriff ist;
das Antriebszahnrad (61) mit dem Motor (50) verbunden ist; und
das Antriebszahnrad (61) in einem Bereich angeordnet ist, der zwischen dem angetriebenen Zahnrad (62) und dem Magnetventil (17, 18, 27, 28, 108, 208) liegt.

12. Fluiddruck-Steuervorrichtung nach Anspruch 1, ferner umfassend einen Drucksensor (19, 29, 009) zum Erfassen eines Drucks des Hydraulikkreislaufs, wobei der Drucksensor (19, 29, 009) auf der gleichen Seite des Gehäuses (30a, 101 a) angeordnet ist.

13. Fluiddruck-Steuervorrichtung nach Anspruch 12, ferner umfassend eine Ummantelung (40, 140), wobei der Motor (50), die Platine (42, 43, A, B), das Magnetventil (17, 18, 27, 28, 108, 208) und der Drucksensor (19, 29, 009) von der Ummantelung (40, 140) bedeckt sind.

14. Fluiddruck-Steuervorrichtung nach Anspruch 1, ferner umfassend:
eine Nebenplatine (B) zum Ansteuern des Magnetventils (17, 18, 28, 28, 108, 208),
wobei der Motor (50), die Hauptplatine (A), das Magnetventil und die Nebenplatine (B) auf einer Seitenoberfläche des Gehäuses (101a) angeordnet sind;
wobei die Hauptplatine (A) nahe der Abdeckung angeordnet ist, so dass die Abdeckung der Seitenoberfläche (145) gegenüberliegt; und
die Nebenplatine (B) zwischen der Hauptplatine (A) und dem Magnetventil (17, 18, 27, 28, 108, 208) angeordnet ist.

15. Fluiddruck-Steuervorrichtung nach Anspruch 14, wobei die Ummantelung (140) einen Hauptbereich umfasst, der den Motor umgibt, wobei die Hauptplatine (A), das Magnetventil (17, 18, 27, 28, 108, 208), die Nebenplatine (B) und die Abdeckung (145) den Hauptbereich bedecken, wobei die Hauptplatine (A) nahe der Abdeckung (145) angeordnet ist.

16. Fluiddruck-Steuervorrichtung nach Anspruch 15, wobei die Abdeckung (145) aus einem Metall gefertigt ist, wobei die Hauptplatine (A) mit der Abdeckung (145) in Kontakt ist.

17. Fluiddruck-Steuervorrichtung, umfassend:
eine Ummantelung (40, 140);
ein Gehäuse (30, 101) mit einem Hydraulikkreislauf;
eine Pumpe (60), die im Gehäuse (30, 101) eingebaut ist;
einen Motor (50) zum Antreiben der Pumpe (60);
eine Platine (42, A) zum Steuern des Motors (50); und
ein Magnetventil (17, 18, 27, 28, 108, 208) zum Verändern einer Entlüftungsmenge des Hydraulikkreislaufs,
eine erste Baugruppe (UR1) umfassend das Magnetventil (17, 18, 27, 28, 108, 208) und den Motor (50), die an der gleichen Seite des Gehäuses (30a, 101 a) angeordnet sind; und
eine zweite Baugruppe (UR2) umfassend die Platine (42, 43, A, B), die an der Ummantelung (40, 140) befestigt ist,
wobei die erste Baugruppe (UR1) und die zweite Baugruppe (UR2) entlang einer gleichen Achse miteinander montiert sind; und
wobei die Platine (42, 43, A, B), der Motor (50), das Magnetventil (17, 18, 27, 28, 108, 208) montiert werden, indem die erste Baugruppe (UR1) mit der zweiten Baugruppe (UR2) zusammengesetzt wird.

18. Fluiddruck-Steuervorrichtung nach Anspruch 17, wobei
das Magnetventil (17, 18, 27, 28, 108, 208) einen Ventilkörper (VB) und einen Spulenbereich (17a, 18a, 27a, 28a, 108a, 208a) umfasst;
der Ventilkörper (VB) am Gehäuse (30, 101) befestigt ist, eine Achse des Ventilkörpers (VB) der gleichen Achse entspricht, und der Motor (50) an der gleichen Seite des Gehäuses (30a, 101 a) befestigt ist, die am Ventilkörper (VB) befestigt ist; und
der Spulenbereich (17a, 18a, 27a, 28a, 108a, 208a) in der Platine (42, 43, A, B) integriert ist und der Achse des Ventilkörpers (VB) entspricht.

19. Fluiddruck-Steuervorrichtung nach Anspruch 17, ferner umfassend einen Drucksensor (19, 29, 009) zum Erfassen eines Drucks des Hydraulikkreislaufs,
wobei der Drucksensor (19, 29, 009), wobei der Drucksensor (19, 29, 009) an der ersten Baugruppe (UR1) befestigt ist und der Drucksensor (19, 29, 009) mit der Platine (42, 43, A, B) verbunden wird, indem die erste Baugruppe (UR1) mit der zweiten Baugruppe (UR2) zusammengesetzt wird.

20. Verfahren zum Montieren einer Fluiddruck-Steuervorrichtung, umfassend:
Ausbilden einer ersten Baugruppe durch Montieren einer Pumpe (60), eines Motors (50) zum Steuern der Pumpe (60) und eines Ventilkörpers (VB) eines Magnetventils, das an einem Gehäuse (30, 101) befestigt ist;
Ausbilden einer zweiten Baugruppe durch Montieren eines Spulenbereichs des Magnetventils (17a, 18a, 27a, 28a, 108a, 208a), das mit einer Platine (42, 43, A, B) verbunden ist, die an einer Ummantelung (40, 140) befestigt ist; und
Zusammenfügen der ersten Baugruppe (UR1) mit der zweiten Baugruppe (UR2),
wobei der Ventilkörper (VB) des Magnetventils mit dem Spulenbereich (17a, 18a) des Ventils zusammengesetzt wird und der Motor (50) mit der Platine (42, 43, A, B) zusammengesetzt wird.

## Revendications

1. Dispositif de commande de pression de fluide, comprenant :
un boîtier (30, 101) comprenant un circuit hydraulique ;
une pompe (60) construite dans le boîtier (30, 101) ;
un moteur (50) pour entraîner la pompe (60) ;
une carte de circuit imprimé (42, A) pour commander le moteur (50) ; et
une électrovalve (17, 18, 27, 28, 108, 208) pour changer une quantité d'aération du circuit hydraulique,
**caractérisé en ce que** le moteur (50), la carte de circuit imprimé (42, A) et l'électrovalve (17, 18) sont disposés sur un même côté du boîtier (30a, 101a).

2. Dispositif de commande de pression de fluide selon la revendication 1, comprenant en outre un carter (40, 140),
dans lequel le moteur (50), la carte de circuit imprimé (42, A) et l'électrovalve (17, 18, 27, 28, 108, 208) sont recouverts par le carter (40, 140).

3. Dispositif de commande de pression de fluide selon la revendication 2, dans lequel la carte de circuit imprimé (42, A) est en contact avec le carter (40, 140).

4. Dispositif de commande de pression de fluide selon la revendication 3, dans lequel une ailette de refroidissement (41, 146) est formée sur un extérieur du carter (40, 140).

5. Dispositif de commande de pression de fluide selon la revendication 1, dans lequel la pompe (60) a au moins un engrenage d'entraînement et au moins un engrenage entraîné, l'engrenage d'entraînement (61) met en prise l'engrenage entraîné (62) ;
l'engrenage d'entraînement (61) est raccordé au moteur (50) ; et
l'engrenage d'entraînement (60) est disposé sur une zone qui se trouve entre l'engrenage entraîné (62) et l'électrovalve (17, 18, 27, 28, 108, 208).

6. Dispositif de commande de pression de fluide selon la revendication 5, comprenant en outre un carter (40, 140),
dans lequel le moteur (50) et la carte de circuit imprimé (42, 43, A, B) et l'électrovalve (17, 18, 27, 28, 108, 208) sont recouverts par le carter (40, 140).

7. Dispositif de commande de pression de fluide selon la revendication 6, dans lequel la carte de circuit imprimé (42, 43, A, B) est en contact avec le boîtier (40, 140).

8. Dispositif de commande de pression de fluide selon la revendication 7, dans lequel une ailette de refroidissement (41, 146) est formée sur un extérieur du carter (40, 140).

9. Dispositif de commande de pression de fluide selon la revendication 1, dans lequel le moteur (50) comprend un moteur sans balai et un capteur de position ; et
le capteur détecte la position d'un rotor du moteur sans balai.

10. Dispositif de commande de pression de fluide selon la revendication 9, comprenant en outre un carter (40, 140),
dans lequel le moteur (50), la carte de circuit imprimé (42, 43, A, B) et l'électrovalve (17, 18, 27, 28, 108, 208) sont recouverts par le carter (40, 140).

11. Dispositif de commande de pression de fluide selon la revendication 9, dans lequel la pompe (60) a au moins un engrenage d'entraînement (61) et au moins un engrenage entraîné (62), l'engrenage d'entraînement (61) met en prise l'engrenage entraîné (62) ;
l'engrenage d'entraînement (61) est raccordé au moteur (50) ; et
l'engrenage d'entraînement (61) est disposé sur une zone qui se trouve entre l'engrenage entraîné (62) et l'électrovalve (17, 18, 27, 28, 108, 208).

12. Dispositif de commande de pression de fluide selon la revendication 1, comprenant en outre un capteur de pression (19, 29, 009) pour détecter une pression du circuit hydraulique,
dans lequel le capteur de pression (19, 29, 009) est disposé sur le même côté du boîtier (30a, 101a).

13. Dispositif de commande de pression de fluide selon la revendication 12, comprenant en outre un carter (40, 140),
dans lequel le moteur (50), la carte de circuit imprimé (42, 43, A, B), l'électrovalve (17, 18, 27, 28, 108, 208) et le capteur de pression (19, 29, 009) sont recouverts par le carter (40, 140).

14. Dispositif de commande de pression de fluide selon la revendication 1, comprenant en outre :
une carte de sous circuit imprimé (B) pour entraîner l'électrovalve (17, 18, 27, 28, 108, 208),
dans lequel le moteur (50), la carte de circuit imprimé principal (A), l'électrovalve et la carte de sous circuit imprimé (B) sont disposés sur une surface latérale du boîtier (101 a) ;
dans lequel la carte de circuit imprimé principal (A) est disposée à proximité du couvercle de sorte que le couvercle est opposé à la surface latérale (145) ; et
la carte de sous circuit imprimé (B) est disposée entre la carte de circuit imprimé principal (A) et l'électrovalve (17, 18, 27, 28, 108, 208).

15. Dispositif de commande de pression de fluide selon la revendication 14, dans lequel le carter (140) comprend une partie principale entourant le moteur ; la carte de circuit imprimé principal (A), l'électrovalve (17, 18, 27, 28, 108, 208), la carte de sous circuit imprimé (B) et le couvercle (145) recouvrant la partie principale,
dans lequel la carte de circuit imprimé principal (A) est disposée à proximité du couvercle (145).

16. Dispositif de commande de pression de fluide selon la revendication 15, dans lequel le couvercle (145) est réalisé à partir d'un métal,
dans lequel la carte de circuit imprimé principal (A) est en contact avec le couvercle (145).

17. Dispositif de commande de pression de fluide, comprenant :
un carter (40, 140) ;
un boîtier (30, 101) comprenant un circuit hydraulique ;
une pompe (60) construite dans le boîtier (30, 101) ;
un moteur (50) pour entraîner la pompe (60) ;
un carte de circuit imprimé (42, A) pour commander le moteur (50) ;
une électrovalve (17, 18, 27, 28, 108, 208) pour changer une quantité d'aération du circuit hydraulique ;
un premier ensemble (UR1) comprenant l'électrovalve (17, 18, 27, 28, 108, 208) et le moteur (50), qui sont fixés sur un même coté du boîtier (30a, 1 01 a) ; et
un second ensemble (UR2) comprenant la carte de circuit imprimé (42, 43, A, B) qui est fixée sur le carter (40, 140),
dans lequel le premier ensemble (UR1) et le second ensemble (UR2) sont assemblés entre eux le long d'un même axe ; et
dans lequel la carte de circuit imprimé (42, 43, A, B), le moteur (50) et l'électrovalve (17, 18, 27, 28, 108, 208) sont assemblés en assemblant le premier ensemble (UR1) au second ensemble (UR2).

18. Dispositif de commande de pression de fluide selon la revendication 17, dans lequel l'électrovalve (17, 18, 27, 28, 108, 208) comprend un corps de soupape (VB) et une partie de bobine (17a, 18a, 27a, 28a, 108a, 208a) ;
le corps de soupape (VB) est fixé sur le boîtier (30, 101), un axe du corps de soupape (VB) correspond au même axe, et le moteur (50) est fixé sur le même côté du boîtier (30a, 101a) qui est fixé sur le corps de soupape (VB) ; et
la partie de bobine (17a, 18a, 27a, 28a, 107a, 108a) est intégrée avec la carte de circuit imprimé (42, 43, A, B) et correspond à l'axe du corps de soupape (VB).

19. Dispositif de commande de pression de fluide selon la revendication 17, comprenant en outre un capteur de pression (19, 29, 009) pour détecter une pression du circuit hydraulique,
dans lequel le capteur de pression (19, 29, 009) est fixé sur le premier ensemble (UR1) et le capteur de pression (16, 29, 009) est assemblé avec la carte de circuit imprimé (42, 43, A, B) en assemblant le premier ensemble (UR1) au second ensemble (UR2).

20. Procédé permettant d'assembler un dispositif de commande de pression de fluide, comprenant les étapes consistant à :
traiter un premier ensemble en assemblant une pompe (60), un moteur (50) pour commander la pompe (60) et un corps de soupape d'une électrovalve (VB) fixée sur un boîtier (30, 101) ;
traiter un second ensemble en assemblant une partie de bobine de l'électrovalve (17a, 18a, 27a, 28a, 108a, 208a) raccordée à une carte de circuit imprimé (42, 43, A, B) qui est fixée sur un carter (40, 140) ; et
assembler le premier ensemble (UR1) au second ensemble (UR2), le corps de soupape de l'électrovalve (VB) étant assemblé à la partie de bobine de la soupape (17a, 18a) et le moteur (50) étant assemblé à la carte de circuit imprimé (42, 43, A, B).
